# EUROPEAN PATENT SPECIFICATION

(11) **EP 2 450 270 B1**
(45) Date of publication and mention of the grant of the patent: **28.11.2012**
(21) Application number: 11183800.9
(22) Date of filing: 04.10.2011
(51) Int. Cl.: B62K 21/02, B62K 21/04

(54) **Bicycle front fork**
Fahrrad-Vorderradgabel
Fourche avant de bicyclette

(30) Priority: 03.11.2010 CN 201020598971 U
(43) Date of publication of application: 09.05.2012
(73) Proprietor: Yuan Min An Enterprise Co., Ltd., Taichung City 420 (TW)
(72) Inventor: Yu, Kuo-Pin, 420 TAICHUNG CITY (TW)
(74) Representative: Becker Kurig Straus

(56) References cited:
- WO-A1-91/01246
- FR-A1- 2 768 691
- US-A- 5 762 352
- US-B2- 7 413 207

## Description

### BACKGROUND OF THE INVENTION

### 1. Field of the Invention

The present invention relates generally to a bicycle, and more particularly, to a bicycle front fork.

### 2. Description of the Related Art

US 7,413,207 disclosed a bicycle front fork made from fiber reinforced resin and comprising an upright tube and two blades extending from the bottom of the upright tube. Because the upright tube is only connected at its bottom end face with the two blades, the joints between the upright tube and the two blades are wrapped with a plurality of layers of fiber fabric prepreg for structure reinforcement. This way can make the bicycle front fork have a sufficient structural strength that can fulfill the demand of actual use; however, this increases the weight of the bicycle front fork. Therefore, it is desired to provide a bicycle front fork having a lightweight with a sufficient structural strength.

### SUMMARY OF THE INVENTION

The present invention has been accomplished in view of the above-noted circumstances. It is therefore the primary objective of the present invention to provide a bicycle front fork having a reduced weight while maintaining a sufficient structural strength.

To achieve the above-mentioned objective, the bicycle front fork provided by the present invention comprises an upright tube and an inverted U-shaped body both made from a fiber-reinforced composite material. The body is provided with a crown connected with a bottom portion of the upright tube, and two blades downwardly and respectively extending from two ends of the crown. The blades each have a tubular shape with an intermediate rib therein. The crown includes a top wall through which the bottom portion of the upright tube penetrates, a bottom wall abuttedly connected with a bottom end of the upright tube, a front wall connected between the top wall and the bottom wall and spaced from the upright tube, and a rear wall connected between the top wall and the bottom wall and spaced from the upright tube. By means of the structure of the bicycle front fork of the present invention, the amount of the fiber fabric prepreg used at the joint between the upright tube and the body for structure reinforcement can be reduced, such that the bicycle front fork may have the advantages of lightweight and high structural strength.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a perspective view of a bicycle front fork according to a first preferred embodiment of the present invention;
FIG. 2 is a cross-sectional view taken along line 2-2 of FIG. 1;
FIG. 3 is a partially cross-sectional view of the bicycle front fork of the first preferred embodiment of the present invention; and
FIG. 4 is a partially cross-sectional view of a bicycle front fork according to a second preferred embodiment of the present invention.

### DETAILED DESCRIPTION OF THE INVENTION

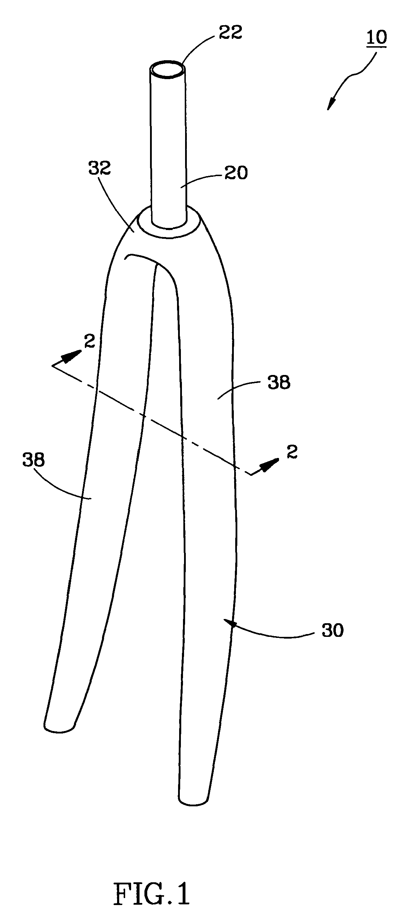

Referring to FIGS. 1-3, a bicycle front fork, provided by a first preferred embodiment of the present invention and denoted with reference numeral 10 in the drawings, comprises an upright tube 20 and an inverted U-shaped body 30 both made from a fiber-reinforced resin. For the fiber used in the fiber-reinforced resin, various kinds of fiber can be used, including but not limited to carbon fiber, boron fiber, glass fiber or Kevlar® fiber. For the resin, thermoplastic or thermosetting resin can be used.

The upright tube 20 is a straight tube having a top portion 22 for mounting thereon a steering handle (not shown in the drawing), and a bottom portion 24 connected with the inverted U-shaped body 30.

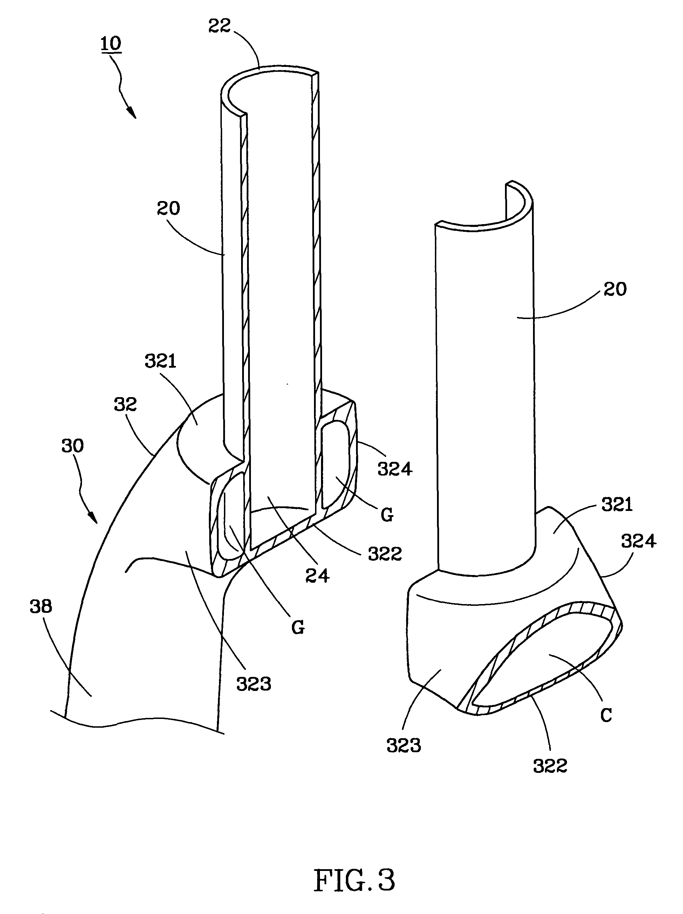

The body 30 includes a crown 32 connected with the bottom portion 24 of the upright tube 20, and two blades 38 downwardly and respectively extending from two ends of the crown 32. The crown 32 includes a top wall 321 through which the upright tube 20 penetrates, a bottom wall 322 abuttedly connected with the bottom end of the bottom portion 24 of the upright tube 20, a front wall 323 connected between the top wall 321 and the bottom wall 322 and spaced from the upright tube 20 with a gap G, and a rear wall 324 connected between the top wall 321 and the bottom wall 322 and spaced from the upright tube 20 with a gap G. From the viewing angle at a right side of the crown, it can be seen in FIG. 3 that a right tunnel C is defined by the top wall 321, bottom wall 322, front wall 323 and rear wall 324. Along the path of the right tunnel C into deep inside of the right tunnel C, it can be seen that the right tunnel C is divided at its deep inside by the bottom portion 24 of the upright tube 20 into two compartments forming the two gaps G, and then the two compartments are merged to form a left tunnel (not shown in the drawings).

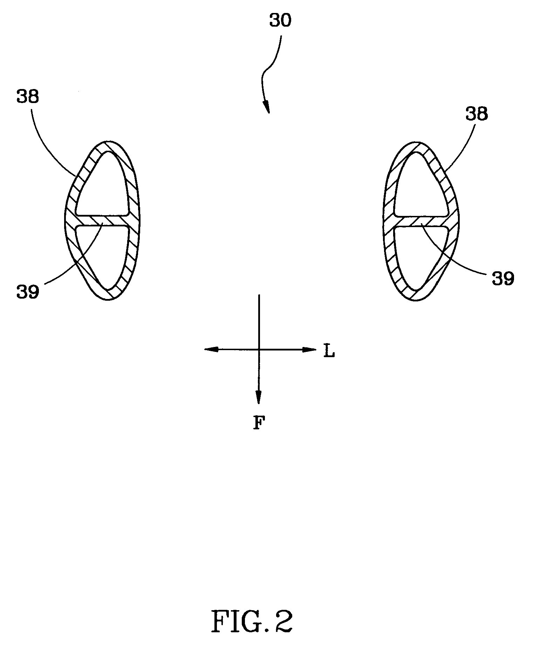

The two blades 38 each have a tubular shape. As shown in FIG. 2 illustrating the cross-sectional view of the blades 38, each blade 38 has a relatively large width in the heading direction F of the bicycle and a relatively small width in the transverse direction L, and each blade 38 has an intermediate rib 39 therein. The intermediate rib 39 is substantially perpendicular to the heading direction F, i.e. parallel to the transverse direction L.

It is to be mentioned that the upright tube 20 and the crown 32 of the body 30 are tightly connected with each other without any gap therebetween, and the bottom end of the upright tube 20 and the bottom wall 322 of the crown 32 are tightly connected with each other without any gap therebetween. In manufacturing, the upright tube 20 and the inverted U-shaped body 30 are individually pre-formed by fiber fabric prepregs, and then the upright tube 20 and the inverted U-shaped body 30 are integrally cured together in a molding process, such that they can be tightly joined together. Since the bottom portion 24 of the upright tube 20 extends through the top wall 321 into the inside of the crown 32 and the bottom end of the bottom portion 24 of the upright tube 20 is integrally connected with the bottom wall 322 of the crown 32, the connection between the upright tube 20 and the inverted U-shaped body 30 is more stable than that of the conventional bicycle front fork, such that the amount of the fiber fabric prepreg used at the joint between the upright tube 20 and the inverted U-shaped body 30 for structure reinforcement can be reduced. Therefore, the weight of the bicycle front fork can be reduced without affecting the structural strength of the bicycle front fork. In other words, the bicycle front fork of the present invention has advantages of lightweight and high structural strength, which can fulfill the lightweight demand of bicyclist and has a great potential in the market.

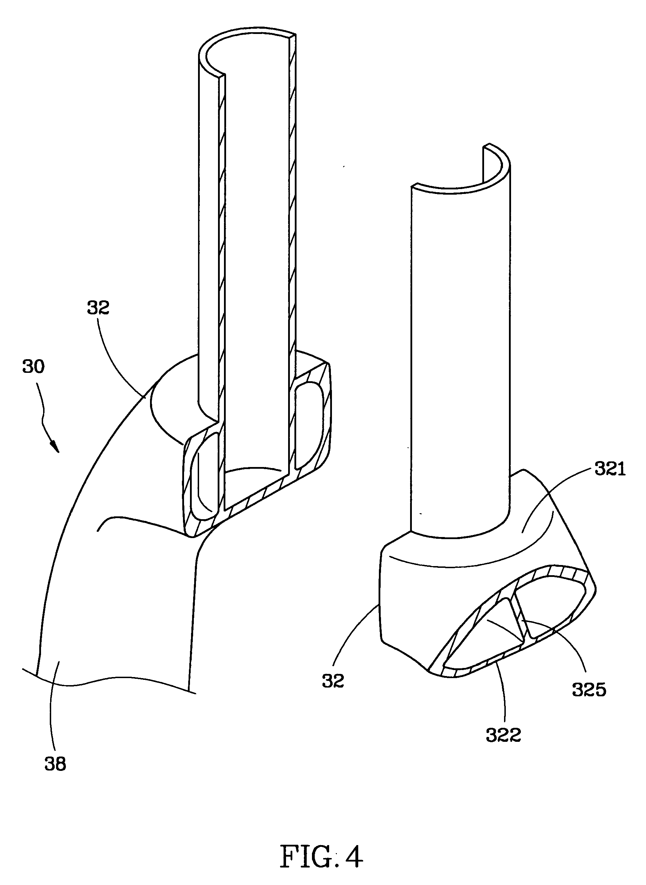

It should be understood that the bicycle front fork disclosed in the above-mentioned preferred embodiment is given for illustration of the essential technical features of the present invention only, not to limit the scope of the present invention. It will be obvious that the bicycle front fork may be varied in many ways. For example, as shown in FIG. 4, an intermediate rib 325 integrally extending from the intermediate rib 39 of the blade 38 shown in FIG. 2 can be provided inside the crown 32 of the inverted U-shaped body 30. The intermediate rib 325 is connected with the top wall 321 and the bottom wall 322 to divide the right tunnel C into two compartments. Such variations are not to be regarded as a departure from the scope of the invention, and all such modifications as would be obvious to one skilled in the art are intended to be included within the scope of the following claims.

## Claims

1. A bicycle front fork (10) comprising:
an upright tube (20) made from a fiber-reinforced composite material;
an inverted U-shaped body (30) made from a fiber-reinforced composite material and provided with a crown (32) connected with a bottom portion (24) of the upright tube (20), and two blades (38) downwardly and respectively extending from two ends of the crown (32), each of the blades (38) having a tubular shape with an intermediate rib (39),
wherein the bicycle front fork (10) is **characterized in that** the crown (32) includes a top wall (321) through which the upright tube (20) penetrates, a bottom wall (322) abuttedly connected with a bottom end of the upright tube (20), a front wall (323) connected between the top wall (321) and the bottom wall (322) and spaced from the upright tube (20), and a rear wall (324) connected between the top wall (321) and the bottom wall (322) and spaced from the upright tube (20).

2. The bicycle front fork of claim 1, which is **characterized in that** the upright tube (20) is tightly connected with the top wall (321) of the crown (32) of the inverted U-shaped body (30) without a gap between the upright tube (20) and the top wall (321).

3. The bicycle front fork of claim 1, which is **characterized in that** the bottom end of the upright tube (20) is tightly connected with the bottom wall (322) of the crown (32) of the inverted U-shaped body (30) without a gap between the bottom end of the upright tube (20) and the bottom wall (322).

4. The bicycle front fork of claim 1, which is **characterized in that** the intermediate rib (39) is substantially perpendicular to a heading direction (F) of a bicycle.

5. The bicycle front fork of claim 1, which is **characterized in that** the crown (32) of the inverted U-shaped body (30) further comprises an intermediate rib (325) connected between the top wall (321) and the bottom wall (322) of the crown (32).

## Patentansprüche

1. Vordergabel (10) für ein Fahrrad, umfassend:
eine aus einem faserverstärktem Verbundwerkstoff hergestellte gerade Röhre (20);
einen aus einem faserverstärktem Verbundwerkstoff hergestellten, invertierten U-förmigen Körper (30), der mit einer Krone (32) bereitgestellt ist, die mit einem unteren Abschnitt (24) der geraden Röhre (20) verbunden ist, und worin sich zwei Schäfte (38) nach unten und jeweils von zwei Enden der Krone (32) erstrecken, worin jeder der Schäfte (38) eine Röhrenform mit einer Zwischenrippe (39) aufweist;
worin die Vordergabel (10) für ein Fahrrad **dadurch gekennzeichnet ist, dass** die Krone (32) eine obere Wand (321), die von der geraden Röhre (20) durchbrochen ist, eine untere Wand (322), die mit einem unteren Ende der geraden Röhre (20) angrenzend verbunden ist, eine vordere Wand (323), die zwischen der oberen Wand (321) und der unteren Wand (322) verbunden ist und von der geraden Röhre (20) beabstandet ist, und eine hintere Wand (324) umfasst, die zwischen der oberen Wand (321) und der unteren Wand (322) verbunden ist und von der geraden Röhre (20) beabstandet ist.

2. Vordergabel (10) für ein Fahrrad nach Anspruch 1, die **dadurch gekennzeichnet ist, dass** die gerade Röhre (20) mit der oberen Wand (321) der Krone (32) des invertierten U-förmigen Körpers (30) ohne eine Lücke zwischen der geraden Röhre (20) und der oberen Wand (321) fest verbunden ist.

3. Vordergabel (10) für ein Fahrrad nach Anspruch 1, die **dadurch gekennzeichnet ist, dass** das untere Ende der geraden Röhre (20) mit der unteren Wand (322) der Krone (32) des invertierten U-förmigen Körpers (30) ohne eine Lücke zwischen der dem unteren Ende der geraden Röhre (20) und der unteren Wand (322) fest verbunden ist.

4. Vordergabel (10) für ein Fahrrad nach Anspruch 1, die **dadurch gekennzeichnet ist, dass** die Zwischenrippe (39) im Wesentlichen senkrecht zu einer Fahrrichtung (F) eines Fahrrads steht.

5. Vordergabel (10) für ein Fahrrad nach Anspruch 1, die **dadurch gekennzeichnet ist, dass** die Krone (32) des invertierten U-förmigen Körpers (30) ferner eine Zwischenrippe (325) umfasst, die zwischen der oberen Wand (321) und der unteren Wand (322) der Krone (32) verbunden ist.

## Revendications

1. Une fourche avant de bicyclette (10) comprenant :
un tube vertical (20) constitué d'un matériau composite renforcé de fibres;
un corps en forme de U inversé (30) constitué d'un matériau composite renforcé de fibres et muni d'une couronne (32) reliée à une partie inférieure (24) du tube vertical (20) et deux lames (38) s'étendant vers le bas, respectivement à partir de deux extrémités de la couronne (32), chacune desdites lames ayant une forme tubulaire avec une nervure interne (39),
dans laquelle la fourche avant de bicyclette (10) est **caractérisée en ce que** la couronne (32) comprend une paroi supérieure (321) au travers de laquelle pénètre le tube vertical (20), une paroi de fond (322) adjacente à une extrémité inférieure du tube vertical (20), une paroi avant (323) reliée entre la paroi supérieure (321) et la paroi de fond (322) et espacée du tube vertical (20), et une paroi arrière (324) reliée entre la paroi supérieure (321) et la paroi de fond (322) et espacée du tube vertical (20).

2. La fourche avant de bicyclette de la revendication 1, **caractérisée en ce que** le tube vertical (20) est étroitement relié à la paroi supérieure (321) de la couronne (32) du corps en forme de U inversé(30) sans un écart entre le tube vertical (20) et la paroi supérieure (321).

3. La fourche avant de bicyclette de la revendication 1, **caractérisée en ce que** l'extrémité inférieure du tube vertical (20) est étroitement reliée à la paroi de fond (322) de la couronne (32) du corps en forme de U inversé (30) sans un écart entre l'extrémité inférieure du tube vertical (20) et la paroi de fond (322).

4. La fourche avant de bicyclette de la revendication 1, **caractérisée en ce que** la nervure intermédiaire (39) est sensiblement perpendiculaire à une position de direction (F) d'une bicyclette.

5. La fourche avant de bicyclette de la revendication 1, **caractérisée en ce que** la couronne (32) du corps en forme de U inversé (30) comprend en outre une nervure intermédiaire (325) reliée à la paroi supérieure (321) et à la paroi de fond (322 ) de la couronne (32).
